# EUROPEAN PATENT SPECIFICATION

(11) **EP 0 458 528 B1**
(45) Date of publication and mention of the grant of the patent: **27.12.1995**
(21) Application number: 91304421.0
(22) Date of filing: 16.05.1991
(51) Int. Cl.: G11B 23/50, G11B 33/14

(54) **Data storage device with vapour pressure control system**
Datenspeicherungsvorrichtung mit Dampfdrucksteuersystem
Dispositif de stockage de données avec système de contrôle de la pression de vapeur

(30) Priority: 24.05.1990 US 535269
(43) Date of publication of application: 27.11.1991
(73) Proprietor: International Business Machines Corporation, Armonk, N.Y. 10504 (US)
(72) Inventor: Brown, Charles Allen, San Jose, California 95123 (US); Gregory, Thomas Allen, Rochester, Minnesota 55901 (US); Keller, Christopher Guild, Rochester, Minnesota 55901 (US); Wendt, Herman Russell, San Jose, California 95123 (US); Zingher, Arthur Richard, White Plains, New York 10604 (US)
(74) Representative: Moss, Robert Douglas

(56) References cited:
- EP-A- 0 127 444
- US-A- 4 789 913
- PATENT ABSTRACTS OF JAPAN vol. 10, no. 84 (P-442)(2141) 03 April 1986, & JP-A- 60 219695 (NIPPON DENSHIN DENWA KOSHA) 02 November 1985,
- PATENT ABSTRACTS OF JAPAN vol. 14, no. 207 (P-1043) 26 April 1990, & JP-A-0246586
- PATENT ABSTRACTS OF JAPAN vol. 10, no. 348 (P-519) 22 November 1986, & JP-A- 61 148691 (FUJITSU LTD) 07 July 1986,
- PATENT ABSTRACTS OF JAPAN vol. 14, no. 490 (P-1122) 25 October 1990 & JP-A- 02199691 (NEC CORP) 08 August 1990
- PATENT ABSTRACTS OF JAPAN vol. 13, no. 566 (P-976) 15 December 1989, & JP-A- 01 236423 (VICTOR CO OF JAPAN LTD) 21 September 1989,
- PATENT ABSTRACTS OF JAPAN vol. 12, no. 34 (P-662) 02 February 1988, & JP-A- 62 184685
- PATENT ABSTRACTS OF JAPAN vol. 9, no. 090 (P-350) 19 April 1985, & JP-A-59 218633
- & JP-A- 59 218633 (FUJITSU KK) 08 December 1984,

## Description

### Field of the Invention

This invention relates to data storage devices with vapour pressure control systems that regulate the vapour phase composition within an enclosure of said data storage device.

### Background of the Invention

A critical feature of rigid disk magnetic storage devices is the vulnerability to failure by the slider wearing into the magnetic layer on the disk surface. Magnetic performance improvements have been achieved by using thinner magnetic coatings (less than 100 nanometers thick), and lower flying heights (less than 250 nanometers). Both of these factors mean that the tribology of the system must be excellent if a useful life is to be achieved. A thin film of lubricant molecules is required as part of the tribological system to keep the coefficient of friction low when the slider lands or the disk, or intermittently hits it while flying.

In the case of earlier magnetic disk data storage devices, the magnetic medium was a magnetic ink that had significant thickness and porosity. A relatively large amount of lubricant could be accommodated by such a disk, so it was not as sensitive to monolayer quantities of adsorbed contaminants as present disks are. Present disks have an overcoat that is only 20 to 50 nanometers thick, and has very little porosity for storing lubricant. In fact, the disk lubricant is typically only one to several monomolecular layers thick. For a given disk design the lubricant thickness must be held to very close tolerances. If the lubricant gets too thin, the coefficient of friction goes up and wear-out occurs sooner. If the lubricant is too thick, the slider will become stuck to the disk in a process called stiction which can be strong enough to prevent the motor from starting up.

Several lubrication strategies are in use today. A lubricant film may be chemically bonded to the disk surface, and a mobile lubricant film may or may not be added on top of it. A mobile film may be used alone through a one-time application of lubricant at time of manufacture. Or, as taught in US patent 4,789,913 an equilibrium film thickness is maintained on the disk surface by replenishment through the vapour phase from a reservoir of lubricant within the device enclosure.

Once a strategy has been selected for maintaining the correct thickness, it then becomes important to maintain the correct composition of the film. Contaminant molecules in the vapour phase will become incorporated into the lubricant film. It is unlikely that these compounds will improve the lubrication process, and depending on their chemical structure, they may even destroy it. This has occurred on a number of occasions, resulting in the elimination of certain types of chemicals from the components that go into the device because they cause either wear-out or stiction even when present in only trace amounts in the lubricant film.

The invention disclosed herein is designed to control this problem of lubricant film contamination from the vapour phase.

The key variable to be controlled for each molecular species present in the atmosphere of the enclosure is its relative vapour density. The relative vapour density of any given compound at a given temperature is defined as the ratio of the mass of the compound present per unit volume of air to the mass of the compound that is present in a unit volume of air that is saturated with the compound at that temperature. This is analogous to the special case of water for which this variable is called relative humidity. It is important because the extent to which a molecular species infiltrates the lubricant film is a function of its relative vapour density at the disk surface.

Typically, disk enclosures today are made to be substantially sealed, so the rate at which molecules evaporate from the components such as greases and plastics is greater than the rate at which they leak out of the enclosure. Therefore many of these compounds can be expected to have high relative vapour densities at the disks. In other words, the air is nearly saturated with them.

In the case of US patent 4,789,913 the relative vapour density of the lubricant in the atmosphere is controlled by the temperature difference between the lubricant reservoir and the disk surfaces. The relative vapour density is deliberately maintained at 0.5 to 0.8 at the disks by the fact that the reservoir is positioned at a location that is 1 to 5 degrees Celsius cooler than the disks during operation. If the temperature difference is allowed to become too small, then the relative vapour density of the lubricant at the disks will get too close to one and the lubricant film will get too thick. If the reservoir gets too cold relative to the disks, then the lube film will get too thin. The spinning of the disks moves the air through the reservoir structure. The reservoir is designed to ensure that the air leaving it is saturated (relative vapour density = 1) at the reservoir temperature.

A second embodiment of US patent 4,789,913 on which the preamble of claim 1 is based uses granular carbon particles as the lubricant source. These have a surface area that is many times greater than the surface area of the disk, thereby effectively regulating lubricant vapour pressure within the device enclosure.

A typical file contains many parts that inadvertently act as reservoirs. Plasticizers from plastic parts, volatile components from greases, and contaminants such as fingerprints, are major sources. Many of these are in locations that are as warm as the disks, so depending on the rate at which they outgas, and the efficiency with which the airflow carries the molecules to the disks, a high relative vapour density may be established at the disks. This will lead to increased contamination of the lubricant film.

There have been recent proposals for even higher density memories designated SXM and based on a STM (Scanning Tunneling Microscope) or other techniques with a head moving extremely close to an extremely smooth memory surface. These offer data density approaching atomic density. These SXM memories will have even greater vulnerability to vapours causing adhesion. Also contamination vapours will cause surface contamination which will obscure atoms of data. Thus these new memories will require even more control of adhesion and vapours compared to thin film magnetic disk memories.

### Disclosure of the Invention

Accordingly, the invention provides a data storage device including a substantially sealed enclosure, the atmosphere inside said enclosure containing one or more vapour components, said device including a system for controlling the vapour pressure of said vapour components comprising reservoir means for supplying a particular vapour component into said atmosphere; and characterised by vapour drain means for controlled irreversible withdrawal of vapour components from said atmosphere, said vapour drain means being adapted so as not to fully deplete said reservoir within a predetermined time period (typically the expected useful operational life of the device).

The present invention is advantageous for any data storage device in which a head moves close to a smooth surface, and which is sensitive to vapours in its atmosphere. This includes magnetic disk memories, optical memories with near-field optics, memories or microscopes based on STM or AFM or related techniques. Also the rotary disk geometry can be generalized to include a rectangular X-Y geometry, or a tape geometry. The benefits of the present invention are exemplified in magnetic disk files, especially those with thin film disks, which are sensitive to molecules in the vapour phase that adsorb onto the disk and slider surfaces. The vapour drain provides a controlled vapour loss process, such as an activated carbon adsorber or a leak to the outside. The loss rate is controlled by the design of the convection, diffusion or vapour transport aerodynamics. For the case of a controlled leak, the size of the leak opening is also relevant. The cumulative loss is controlled by limiting the amount of adsorber or the duration of the leak. The vapour drain can be designed to accomplish the following functions: trap outgassed contamination, reduce or control lube relative vapour density in an operating file, reduce or control lube vapour partial pressure in a dormant file and sample the vapour for chemical extraction and analysis.

Thin film magnetic disk files are sensitive to interior vapours. These can cause thin deposits and 'stiction' failure when the file tries to start, the head and disk stick together so that the motor cannot turn. One example is stiction failure caused by outgassed organic contamination emitted by file components. Another example is stiction failure caused by excessive relative vapour density of lubricant in a file with a vapour lubricant reservoir.

Vapor drain is a deliberate controlled loss mechanism to remove some vapour components from the file atmosphere. This removal may use adsorption, absorption, outward leakage or other processes. A file typically has components which steadily emit contamination vapours (or possibly these are brought in with outside air). A vapour drain will steadily remove these contamination vapours. Non-equilibrium dynamics will determine the density of contamination vapour in the file atmosphere, and in some cases it will reach a steady state. This steady-state atmosphere is very low in undesired contaminant molecules, thereby greatly suppressing the population of contaminant molecules adsorbed onto the disk surfaces. Thus a suitable vapour drain will greatly reduce the contamination vapour density, often by more than a factor of 10, depending on the contamination source and its ability to treat the atmosphere. The drain rate is typically controlled by convection aerodynamics. Thus typically vapour loss counterbalances vapour gain, causing a steady state with reduced vapour density. Cumulative drain amount is typically controlled by the adsorber mass or leak duration. A vapour drain can trap outgassed contamination, control relative density of lubricant vapour, or sample vapour for chemical analysis. The vapour drain irreversibly removes vapour from the atmosphere inside the enclosure, although it can be released later to provide a sample for analysis.

Some files replenish the organic lubricant used to coat the disks by vapour transport from a lubricant reservoir. The lubricant reservoir supplies molecules of lubricant into the atmosphere. In this case, a vapour drain will steadily remove the lubricant molecules from the air as well as contamination. Non-equilibrium dynamics will determine the density of lubricant vapour in the file atmosphere, and if the disk drive runs long enough under constant conditions it will reach a steady state, which is often largely independent of temperature. A suitable vapour drain will make this lubricant relative vapour density significantly smaller than the relative vapour density in air saturated with the lubricant. For example, this can readily produce 50% of saturation density. The total loss of lubricant to the drain is arranged so that no more than a predetermined proportion of the lubricant within the reservoir is exhausted over the operational life of the disk file.

Some files have both contamination vapours and lubrication vapours. Depending on various rates, in some cases a vapour drain can greatly reduce the concentration of outgassed vapours, and simultaneously only moderately reduce the concentration of lubricant vapours.

During the early life of the file, more outgassing of materials can be expected to occur until the materials of the parts within the head-disk enclosure become more nearly stabilized. Therefore the structure of the vapour drain should also accommodate the requirement for a variable rate of entrapment or diffusion over the life of the disk drive. This is independent of the lubrication system, which may use vapour replenishment or use a bonded lubricant.

In addition, a vapour drain adsorber accumulates a chemical sample of the vapours in the atmosphere of the head-disk enclosure. Subsequently this sample can be chemically analyzed. As will be shown, this can be accomplished without exposing the head-disk enclosure to the introduction of unfiltered air.

If a filter is used as the vapour drain then this will normally comprise some particulate material such as activated carbon. The filter is placed such that the atmosphere in the disk file flows either through it or past it, whichever is appropriate for the filter in question. Typically the rotation of the disks would be responsible for the atmospheric flow, although other means might be used.

Thus to reiterate, the vapour drain permits steady state control of the composition of the atmosphere within a substantially sealed enclosure. For any fabricated enclosure there will be sources of vapour phase molecules: molecules evapourating from a deliberately installed reservoir, molecules outgassed from components, and molecules diffusing in from the outside world. The purpose of the vapour drain is to minimize the second two classes of molecules in the composition of the enclosure atmosphere because they are generally considered to be contaminants. An example application is a rigid disk magnetic data storage device which requires a monomolecular layer of lubricant on the disk and slider surfaces. The steady state molecular surface density and composition is determined by the vapour composition of the enclosure atmosphere. If outgassing is not controlled, the atmosphere will become saturated with a multitude of species of contaminants which will corrupt the desired lubricant layer. The vapour drain suppresses the contaminant population by capturing these molecules from the atmosphere. The desired lubricant may be a very low vapour pressure material with a long residence time on the disk surface so that it goes into the vapour drain at an infinitesimal rate. Another approach is to have a relatively high vapour pressure lubricant supplied from a reservoir via the vapour phase. These molecules will enter the vapour drain at a high rate, so the reservoir must be able to supply molecules to the air at a much higher rate than the contaminant sources can. For either system the vapour drain will result in less contamination on the surfaces of concern within the enclosure.

### Brief Description of the Drawings

Fig. 1 is a schematic diagram showing a prior art equilibrium type vapour transport lubrication system.

Fig.2 is a schematic illustration of the steady state vapour transport lubrication system of the present invention.

Fig. 3 is a view of a typical magnetic hard disk file with the cover removed.

Fig.4 is a plan view with the cover partly broken away of a disk drive such as shown in Fig.3 which includes a steady state vapour transport system using a flow through vapour drain.

Fig. 5 is a plan view similar to Fig. 4 illustrating a steady state vapour transport system using a flow by vapour drain.

Fig. 6 is a plan view of a device similar to those of Figs. 4 and 5 using a combined reservoir and vapour drain.

Fig. 7 illustrates the combined reservoir and vapour drain of Fig 6.

Fig. 8 illustrates a flow by vapour drain in that can be attached to a disk drive cover to scavenge vapours from a head-disk enclosure.

Fig. 9 illustrates a flow-by vapour drain mounted in an opening in a disk cover mounting and retained between mylar tape and a particulate filter media enabling removal of the vapour entrapping media without exposing the enclosure to unfiltered air.

Fig. 10 schematically illustrates vapour transport in a file with a vapour drain.

Fig. 11 is an electrical analog to describe the dynamics of vapour transport in a file with a vapour drain.

Fig. 12 is an electrical analog to describe another variation of the vapour drain concept.

### DETAILED DESCRIPTION

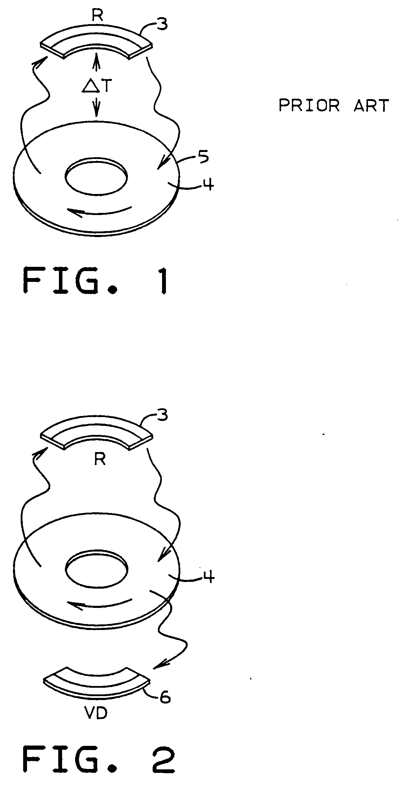

The prior art, as taught in US patent 4,789,913, shows an equilibrium lubricant transfer system that provides a replenishable mono-molecular layer of lubricant on the disk surfaces of a magnetic disk file. The system provides a reliable and renewable lubricant film; however, it is dependent upon maintaining the vapour reservoir at a slightly lower temperature than the disks. If the reservoir were to become warmer than the disks, rapid transport of lubricant to the disk surface would occur, which would impair file operation. The environment must provide an ambient atmosphere that enables the reservoir to be maintained at a temperature slightly below the disk temperature. This limits the application of a disk drive using this lubricant system by invoking an additional requirement for the successful application of the device. This prior art equilibrium system is illustrated schematically in Fig. 1 where a reservoir 3 has a saturated atmosphere emerging from the outlet that releases molecules at the surface 4 of disk 5 to maintain a mono molecular layer of lubricant at the disk surface. In practice, these components are confined within an enclosure such that the saturated air from the reservoir is less than saturated at the temperature of the disks.

Lubricant molecules also migrate from the disk surface 4 to the reservoir 3 as an air flow is induced by rotation on the disk 5. The maintenance of the correct film thickness of the lubricant is dependent on the existence of a "delta T", or a lower temperature, at the reservoir than at the rotating disks 5. Since there is no vehicle for the removal of contaminant vapours from the enclosure, the outgassing and other contaminants migrate to the reservoir and the disk surface and gradually accumulate in the reservoir until contaminants begin to reach the atmosphere coming from the reservoir outlet as well as from the sources of contamination.

In a steady state system utilising the present invention, the reservoir delivers atmosphere that is effectively saturated with lubricant and is admixed with atmosphere passed through a chemical filter that captures substantially all vapours to provide a composite atmosphere with a lube relative vapour pressure that is stabilized at a relative pressure to maintain a partial molecular layer on the disk surface. Fig. 2 schematically illustrates the steady state vapour transport lubrication system wherein there is not only a reservoir 3 and disk surface 4, but also a vapour drain 6. Once again air passing through reservoir 3 emerges saturated with lube from within the reservoir. The vapour drain is a chemical filter that traps vapours and has an air flow which emerges with an organic vapour pressure that is substantially zero. The composite atmosphere supplied from the reservoir 3 and the vapour drain 6 is less than saturated and the system is not therefore dependent upon maintenance of a reduced temperature at the reservoir. The vapour drain essentially permanently entraps vapours in the air passing therethrough. Contaminant vapours as well as lubricant vapours are trapped. This gradually depletes the lubricant, but it also maintains the atmosphere and the disk surface almost contaminant free. It is also important that the lubricant supply in the reservoir not be depleted during the life of the disk drive. The reservoir capacity and the capability of the vapour drain to capture vapours are selected to achieve this result.

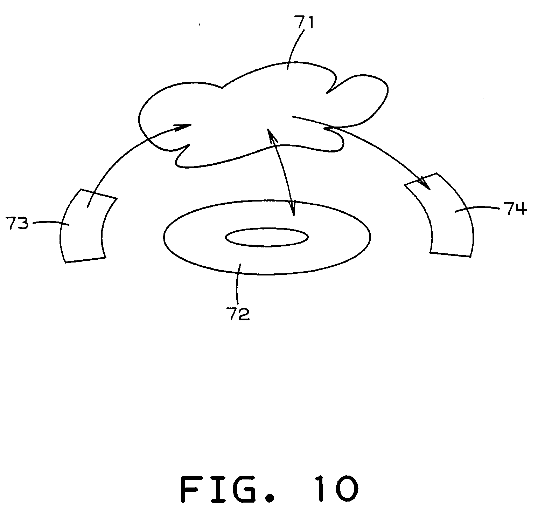

Fig. 10 is a schematic concerning vapours inside a disk file. This shows a density of vapour in the file atmosphere 71, a disk 72, a file component 73 and a vapour drain 74. Into the atmosphere 71, the component 73 supplies vapour density. The surface of the disk 72 develops a coating whose thickness depends on the relative vapour density in the file atmosphere 71 at the disk surface. From the atmosphere 71, a significant part of the vapour density is steadily removed by the vapour drain 74.

The density of vapour is determined by competition between vapour gained from component 73 versus vapour removal by the vapour drain 74. The vapour drain 74 reduces the density of vapours in the file atmosphere 71. The general structure and mechanism of Fig. 10 can be applied to control contamination vapours or to control lubricant vapours. For example, a typical seal band 73A outgasses silicone oil vapour. Thus the vapour drain 74 reduces the density of contamination vapour in the file atmosphere 71. In another example, the file uses vapour replenishment of the lubrication. The component 73B is a lubricant reservoir which emits a lubricant vapour. Thus the vapour drain 74 reduces the density of the lubricant vapour in the file atmosphere 71.

In many cases, after the file has operated long enough at constant conditions, the density of vapour reaches a steady state. This is a dynamic balance between the rate that the component 73 supplies vapour density, and the rate that the vapour drain 74 removes vapour density. At steady state, the relative vapour density is determined mainly by the aerodynamics, convection and diffusion. Also the relative vapour density is largely independent of chemical equilibrium parameters such as file temperature.

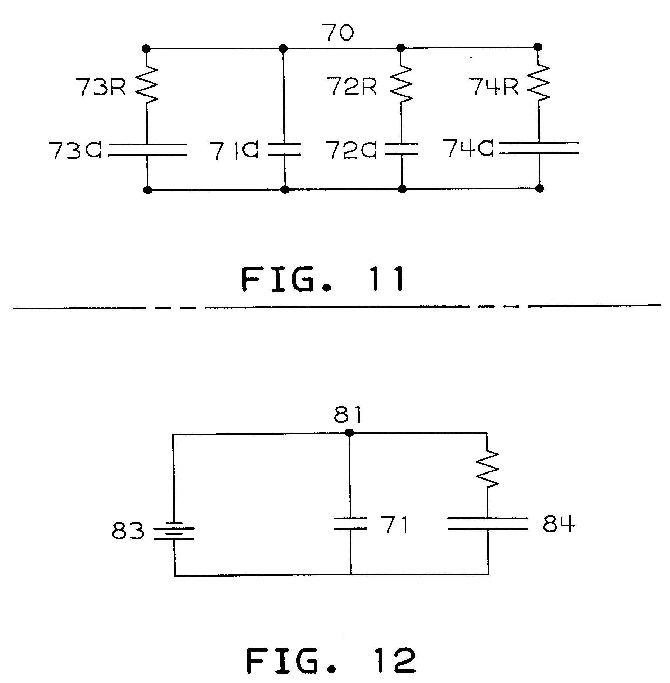

These vapour dynamics may be understood by an electronic analogy Fig. 11. Here vapour is represented by electric charge, and vapour density is represented by voltage. The large capacitor 73C and resistor 73R represent the vapour source component 73 and its ability to add vapour to the air. The large capacitor 74C and resistor 74R represent the vapour drain 74 and its ability to remove vapour from the air. The wire 70 represents air motion inside the file spreading the vapour density throughout the file. The small capacitor 72C and resistor 72R represent the deposition of vapour on the disk 72. The small capacitor 71C represents the ability of the file atmosphere to hold vapour.

This analogy implicitly describes many features of the dynamics. The steady state is particularly simple. In some cases, the time constants are hours for the disk 72RC, many years for the component vapour source 73RC, many years for the vapour drain 74RC.

If the file operates for an intermediate duration, then a steady state will occur. Compared to the source voltage at 72C, the voltage in the file atmosphere 70 will be determined by a voltage divider formed by the ratio between source resistor 73R and the drain resistor 74R. Thus the relative vapour density is determined by the ratio between vapour source and drain rates. This depends on aerodynamics, convection and diffusion, and is largely independent of temperature and other thermo-chemical parameters.

These principles can be applied to lubricant vapour supplied by a lubricant reservoir 73B, and removed by a vapour drain 74. Typically the goal is to achieve 50% to 80% relative density of lubricant vapour (compared to the saturation density at the disk temperature). Therefore the vapour drain 74 should match the lubricant reservoir 73B. (A more detailed statement is given below.) This provides a controlled relative vapour density which is largely independent of temperature gradient or overall temperature. This contrasts with US patent 4,789,913, that teaches a vapour replenishment system that depends on a temperature gradient to control the relative vapour density of lubricant.

Some files have both significant outgassed contamination and vapour lubrication. It is desirable to greatly reduce the outgassed contamination, and to simultaneously achieve .50% to 80% relative density of lubrication vapour. To achieve this requires some parameterization. For a vapour source, parameterize its rate as the equivalent volume per unit time of saturated vapour added to a file atmosphere with initially zero vapour density. For a vapour drain, parameterize its rate as the equivalent volume per time of saturated vapour drained from a file atmosphere with initially saturated vapour density. In some cases, these rates equal the rate that air flows through the vapour source or vapour drain. (Implicitly, these parameterizations might depend on the vapour material. In many cases, these equivalent rates are dominated by convection aerodynamics. For various vapour materials, this depends on the vapour diffusivity, hence on the molecular weight of the vapour. Thus if outgassed contamination and lubricant have similar molecular weights, then the equivalent rate is independent of the vapour material.)

With this parameterization, the file can be designed as follows. First design file materials and components which achieve the following: the outgas gain rate is much smaller than the lubricant supply rate from the reservoir. Second, add a vapour drain whose equivalent drain rate for outgassed vapour (measured in a file atmosphere saturated with outgassed contamination) approximates the equivalent gain rate for the lubricant reservoir (measured in a file atmosphere with zero lubricant vapour). At steady state, this vapour drain will moderately reduce the relative density of lubricant vapour, and simultaneously will reduce the outgas relative vapour density by a much larger factor.

In some cases, the vapour source becomes depleted. This can be expressed as a medium-sized capacitor 73C, so the time constant 73RC is a few months. Also a vapour drain with a medium-sized adsorber 74C and a time constant 74RC of a few months will remove vapour more intensely at first, then less intensely after a few months. More generally, the schematic Fig. 11 implicitly summarizes many additional transient effects. More complex effects can be expressed by using batteries or electrolytic capacitors instead of linear capacitors.

The vapour drain chemical filter element requires high surface area adsorption. Activated carbon is a high capacity non-specific adsorber with a capacity that can be fairly accurately predicted from certain parameters of the carbon and the molar volume of the condensed vapour. As such it is usually the material of choice; however, silica gel, activated alumina and certain synthetic zeolites car be similarly used.

For these materials, the distinction between adsorption and adsorption is not always clear. Also one could use materials wherein said vapour chemically combines with the filter material.

Another function for a vapour drain is to accumulate a sample of vapours for subsequent chemical testing. This favors a reversible absorber. First operate the file for some time with a reversible absorber. Later remove the absorber. In a laboratory, this can be heated to recover the sample for chemical testing. An alternative is to use a solvent to extract the sample. Below we describe structures to facilitate this chemical testing function.

This chemical testing function can be used in various ways. It can be implemented in developmental prototype files to accelerate chemical integration. It can be implemented in a few production files for statistical quality control. It can be implemented in many production files, to allow monitoring chemical quality in the field throughout file life.

Another modification is to design the vapour drain to have a greater initial capacity followed by a diminished adsorption capability. During the early life of the file the outgassing contamination and other contaminant sources are more prolific, whereas following the initial period of operation the generation of contaminants stabilizes at significantly lower levels. This bilevel capability can be achieved by limiting the filtering capacity of the filter such that the initial capacity is significant while the later more restricted capacity supplies a longer term lower filtering capability that generally parallels the rate of contaminant generation.

This time dependence can be readily understood by the electronic analogy Fig. 12. Insofar as the component 73 / battery 83 becomes significantly discharged, and approaches the vapour density 71 / node voltage 81, then it will supply less vapour / current. Likewise as the vapour drain 74 / capacitor 84 becomes significantly charged and approaches the vapour density 71 / node voltage 81, then it will remove less vapour density / current. The time dependence of the vapour drain can be tailored by using several sub-vapour drains with various time constants. This is analogous to connecting in parallel several RC sub-units with various time constants.

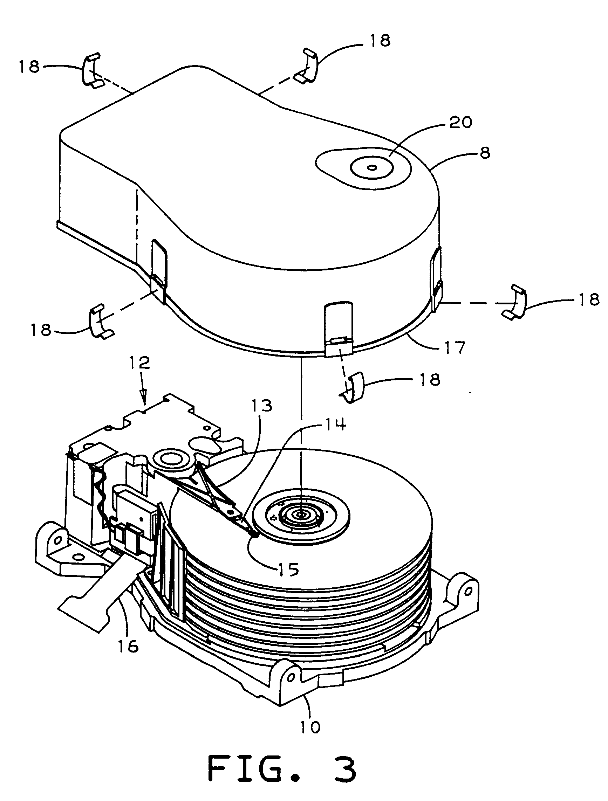

Fig.3 shows a typical magnetic hard disk data storage device with the cover 8 removed. A series of disks 5 are clamped together in axially spaced relation for rotation in unison about a common axis and are mounted on a base plate 10. An actuator 12 carries a series of arms 13 that have secured thereto suspensions 14 that respectively carry transducers 15. Transducers 15 respectively confront disk surfaces 4 to write data to the disk or read data from the disk. The actuator arms 13 move in unison about a common axis to cause the transducers 15 to translate from one concentric recording track to another concentric track on the disk surface. The flat cable 16 contains the conductors that carry signals from the transducers 15 to the circuitry exterior of the head disk enclosure.

In the assembled condition the cover 8 is sealed to base 10 by a gasket 17 and retained by a series of clips 18. The HDA is a substantially sealed enclosure surrounding the transducer heads and rotating data storage disks. A breather filter 20 is provided and positioned to access the enclosed atmosphere at a location of low pressure. This filter 20 is provided to compensate for atmospheric and thermally induced temperature changes. By being located at a low pressure location it is assured that any leakage location is at a higher pressure such that leakage is out of the enclosure and that makeup air is filtered. Thus, no unfiltered air enters the enclosure. To prevent contamination by vapours from outside the head-disk enclosure while the drive is not running, the breather filter is commonly provided with an extended length diffusion passage to prevent or limit the introduction of vapour contamination.

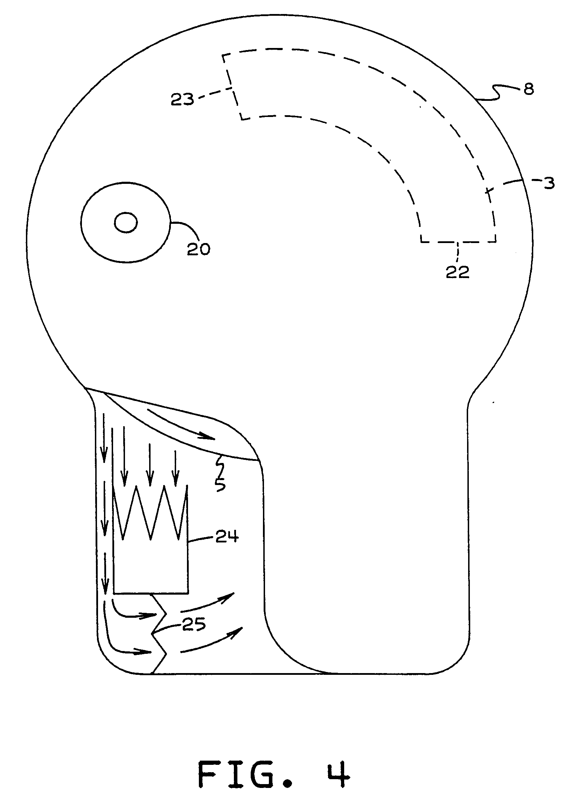

Fig. 4 shows a file, with the cover partially broken away, which includes a steady state lubricant vapour transport system. A reservoir 3 is secured to the inner surface of the cover 8, has an air entrance 22 and an exit opening 23 to permit an air flow induced by rotation of disk 5 to pass therethrough. Another flow of air induced by disk rotation is partitioned with one portion directed through the recirculating particulate filter 24 and another portion directed through the vapour drain 25.

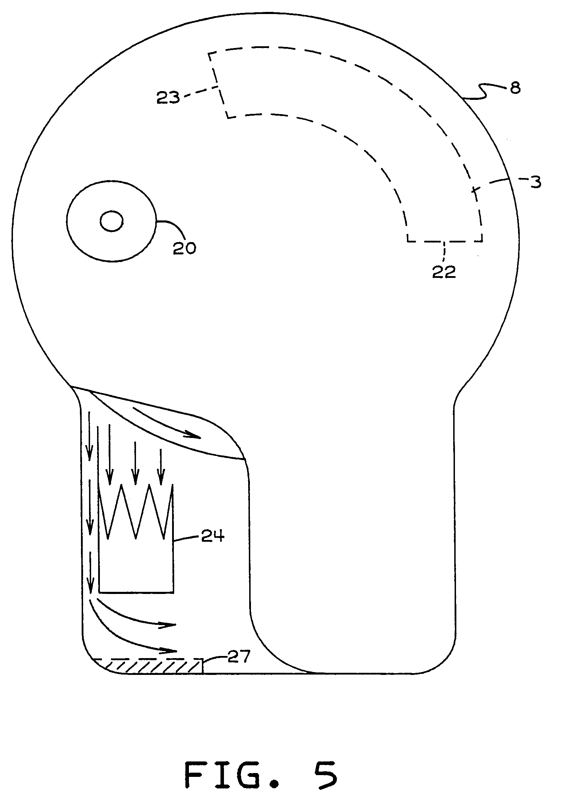

Another embodiment of a steady state system is shown in Fig. 5. This is similar to the system of Fig. 4 with the exception that the vapour drain is a flow by chemical filter for entrapping vapour by adsorption or absorption as the air flow within the enclosure is directed past the filter surface.

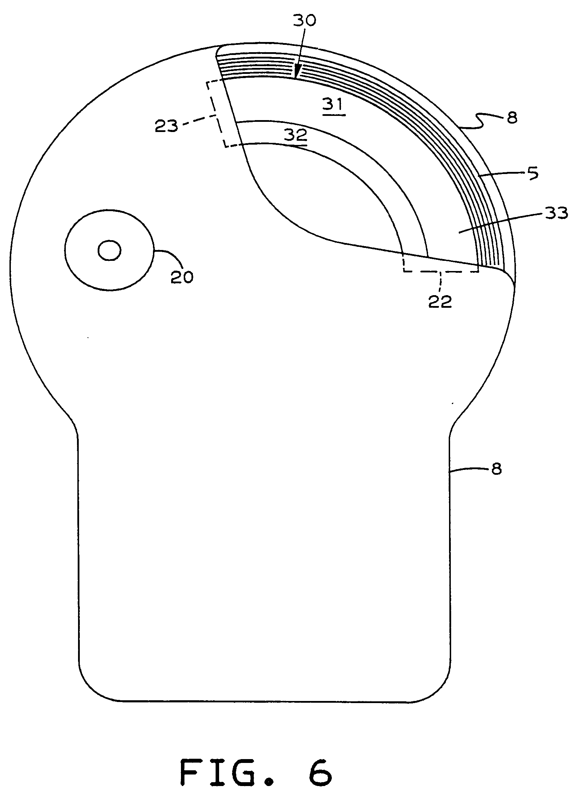

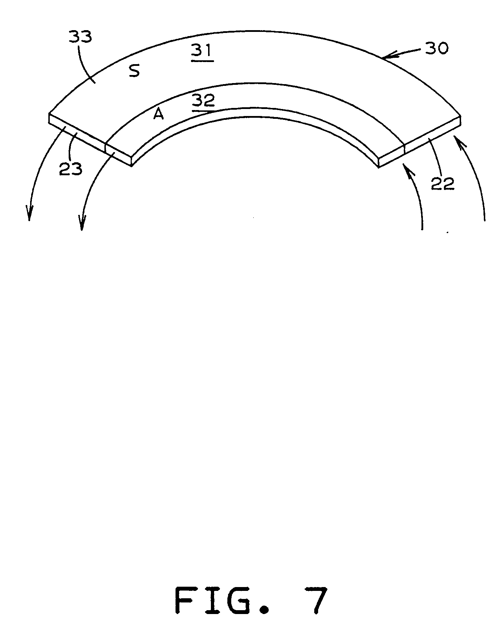

Fig. 6 illustrates a further embodiment showing a disk drive with the cover 8 partially broken away wherein the lubricant reservoir and the vapour drain are formed as parallel arcuate paths in a single assembly. The reservoir-vapour drain assembly upper surface 33 is adhered to the cover inner surface in a position that is in the air flow induced by disk rotation. As shown in Fig. 7, the reservoir-vapour drain assembly includes one arcuate channel 31 that houses the lubricant source or reservoir and the other, adjoining arcuate channel 32 provides the vapour drain. The rotating disk 5 induces an air flow from the entry openings 22 to the outlet openings 23. Since both reservoir 31 and vapour drain 32 are in a common air flow path, the balance between lubricant vapour bearing air and vapour depleted filtered air is easier to achieve in addition to the recognized economy achieved by fabricating both functional elements as a single device.

Since the essence of the vapour drain is vapour control, the concept is also applicable to drives that do not use vapour transport lubrication systems. Disk surfaces having a nonselective affinity for organic vapours are subject to the accumulation of such contaminants which emanate from such sources as material outgassing and bearing lubricants. In particular, drives including disks with bonded lubricants are benefited by the vapour scavenging capabilities of a vapour drain. This contamination control function is useful regardless of the lubrication system, which might be a bonded lubricant, a single application liquid lubricant, vapour replenished lubricant, or other lubrication systems.

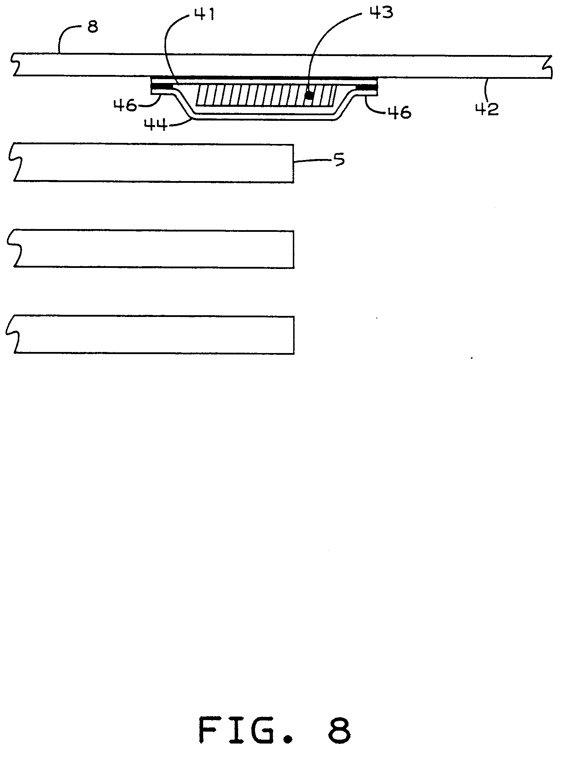

Fig. 8 illustrates an embodiment wherein a vapour drain is used in the form of a flow-by chemical absorber or adsorber which is bonded to the cover 8 and positioned in the path of air circulation induced by rotation of the disks 5. The mylar or polycarbonate backing layer 41 is bonded to the cover 8 inner surface 42. An activated carbon chemical filter 43 is retained by a HEPA particulate media which is bonded to the backing along its margins 46 either by an adhesive or ultra sonic welding.

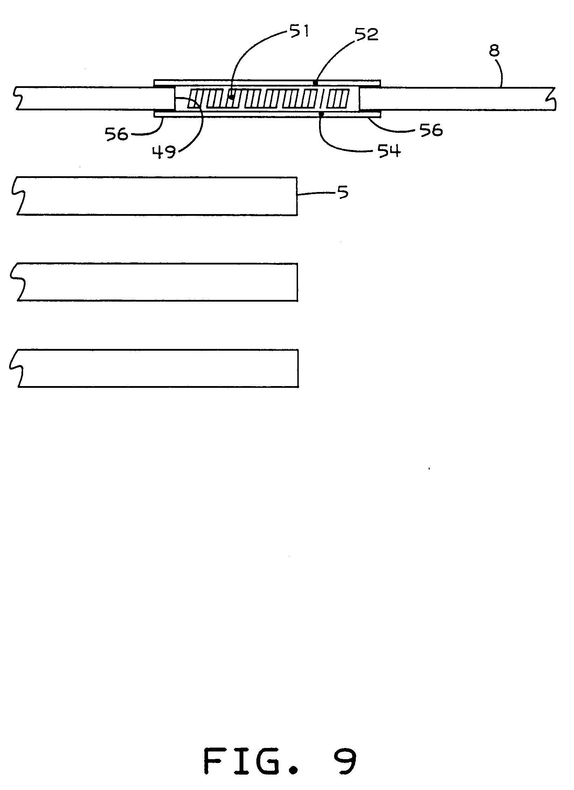

Another embodiment of a vapour drain used for contaminant entrapment is shown in Fig. 9. The vapour drain is placed in an opening 49 in the cover 8. The exterior is sealed by mylar tape 52 which is bonded to the exterior surface of cover 8 along the marginal edge surfaces of the opening 49. The activated carbon vapour drain element 51 is in the cover opening and retained by a HEPA particulate media 54 which is continuously bonded by adhesive about its margins 56 to the inner surface 42 of cover 8. In practice the vapor drain is fabricated as an assembly which is subsequently attached to the drive cover. If the mylar tape at the outer side of the vapour drain is removed, the activated carbon element 51 can be removed and even replaced without exposing the head-disk assembly within the enclosure to unfiltered air. This embodiment can be utilized either as a vapour drain for removing contaminants from the enclosure or as a sampling device which permits the filter to be removed so that entrapped contaminants can subsequently be analyzed.

The vapour drain has been shown in this description as a recirculating type chemical absorber or adsorber for entrapping chemical vapours. This is the preferred embodiment. The same result could be obtained by using a controlled leak that permits a predetermined rate of loss of vapour to the atmosphere outside the enclosure. In this application it would be likewise necessary to limit vapour depletion to a rate that would not cause the vapour from the lubricant reservoir to be exhausted during the useful life of the device. As with entrapment, lubricant vapour and contaminant vapours would be allowed to escape from the enclosure and be replaced by lubricant vapours from the reservoir.

The preceding vapour drain has been described in terms of a magnetic disk memory. Nevertheless it is more widely applicable. A vapour drain can control vapours in an optical memories using "near field optics", which have heads that operate very close to a moving disk. Also a vapour drain can control vapours inside a Scanning Tunneling Microscope (STM), an Atomic Force Microscope (AFM), and other devices that have a head moving ultra-close to an ultra-smooth surface. Furthermore a vapour drain is applicable to a memory device based on the STM microscope or any of these other devices.

## Claims

1. A data storage device including a substantially sealed enclosure, the atmosphere inside said enclosure containing one or more vapour components, said device including a system for controlling the vapour pressure of said vapour components comprising reservoir means (3) for supplying a particular vapour component into said atmosphere;
and characterised by vapour drain means (25) for controlled irreversible withdrawal of vapour components from said atmosphere, said vapour drain means being adapted so as not to fully deplete said reservoir within a predetermined time period.

2. The device of claim 1, wherein said vapour drain means comprises a filter that removes vapour components from said atmosphere by adsorption, absorption or chemical reaction.

3. The device of claim 2 wherein the active element of said filter comprises at least one of activated carbon, silica gel, activated alumina, synthentic zeolite, or other material having a large surface to volume ratio and the ability to absorb certain vapour components.

4. The device of claim 2 or 3, wherein said filter can be removed from within said enclosure, and said device further comprises means (54) preventing unfiltered air from entering the enclosure when said filter is being removed.

5. The device of any of claims 2 to 4, wherein the capacities of said filter and said reservoir means are such that total amount of vapour that the reservoir means is capable of supplying to the atmosphere is greater than the total amount of vapour that the filter is capable of removing.

6. The device of claim 5, wherein said reservoir means and said vapour drain means are aerodynamically similar structures, so as to maintain a controlled ratio of atmospheric flow through or past the two structures.

7. The device of claim 6, wherein said reservoir means and said vapour drain means comprise independent passageways (31, 32) disposed in parallel and attached to a wall in said enclosure.

8. The device of claim 7 wherein said passageways are arcuate and coplanar.

9. The device of any of preceding claim, wherein said reservoir means and said vapour drain means are integrated into a single unit.

10. The device of claim 1, wherein said vapour drain means comprises outlet means for allowing a controlled escape of atmosphere from said enclosure, said outlet means comprising an opening in the wall of said enclosure, and an inlet filter that admits an equal flow of atmosphere into said enclosure.

11. The device of claim 10, wherein said outlet means further comprises a passageway of substantial length on one or other side of said opening in the enclosure wall.

12. The device of any preceding claim, wherein said enclosure contains at least one magnetic storage disk coated with a layer of lubricant, and said particular vapour supplied by the reservoir means is lubricant vapour to maintain by vapour transport the layer of lubricant on said at least one disk.

13. The device of claim 12, wherein the rotation of disks induces the atmosphere within said enclosure to flow through or past said vapour drain means.

14. The device of any preceding claim, wherein the rate of vapour removal by said vapour drain is limited by convective flow.

## Patentansprüche

1. Eine Datenspeicherungsvorrichtung mit einem im wesentlichen dicht geschlossenen Gehäuse, wobei die Atmosphäre innerhalb des Gehäuses eine oder mehrere Dampfkomponenten enthält und wobei die Vorrichtung ein System zum Steuern des Dampfdrucks der Dampfkomponenten aufweist, das eine Behältervorrichtung (3) für die Bereitstellung einer bestimmten Dampfkomponente in der Atmosphäre umfaßt; und gekennzeichnet durch eine Dampfablaßvorrichtung (25) für das gesteuerte, irreversible Abziehen von Dampfkomponenten aus der Atmosphäre, wobei die Dampfablaßvorrichtung so angepaßt ist, daß sie den Behälter innerhalb eines zuvor festgelegten Zeitraums nicht vollständig entleert.

2. Die Vorrichtung nach Anspruch 1, wobei die Dampfablaßvorrichtung einen Filter aufweist, der durch Adsorption, Absorption oder chemische Reaktion Dampfkomponenten aus der Atmosphäre abscheidet.

3. Die Vorrichtung nach Anspruch 2, wobei das aktive Element des Filters mindestens ein Material aus der Liste Aktivkohle, Kieselgel, aktiviertes Aluminiumoxid, synthetisches Zeolith oder ein anderes Material umfaßt, das ein großes Verhältnis von Oberfläche zu Volumen aufweist und die Fähigkeit hat, bestimmte Dampfkomponenten zu absorbieren.

4. Die Vorrichtung nach Anspruch 2 oder 3, wobei der Filter aus dem Gehäuse herausgenommen werden kann und wobei die Vorrichtung desweiteren eine Einrichtung (54) umfaßt, die verhindert, daß ungefilterte Luft in das Gehäuse eindringt, wenn der Filter entfernt wird.

5. Die Vorrichtung nach einem der Ansprüche 2 bis 4, wobei die Fähigkeiten des Filters und der Behältervorrichtung so gestaltet sind, daß die Gesamtmenge an Dampf, die die Behältervorrichtung an die Atmosphäre abgeben kann, größer ist als die Gesamtmenge an Dampf, die der Filter abscheiden kann.

6. Die Vorrichtung nach Anspruch 5, wobei die Behältervorrichtung und die Dampfablaßvorrichtung aerodynamisch ähnliche Strukturen sind, um ein kontrolliertes Verhältnis des atmosphärischen Stroms durch die beiden Strukturen oder entlang der beiden Strukturen zu wahren.

7. Die Vorrichtung nach Anspruch 6, wobei die Behältervorrichtung und die Dampfablaßvorrichtung unabhängige Durchgänge (31, 32) aufweisen, die parallel angeordnet sind und an einer Wand im Gehäuse befestigt sind.

8. Die Vorrichtung nach Anspruch 7, wobei die Durchgänge gebogen und koplanar sind.

9. Die Vorrichtung nach einem der vorangehenden Ansprüche, wobei die Behältervorrichtung und die Dampfablaßvorrichtung in eine einzige Einheit integriert sind.

10. Die Vorrichtung nach Anspruch 1, wobei die Dampfablaßvorrichtung eine Auslaßvorrichtung umfaßt, die ein kontrolliertes Entweichen der Atmosphäre aus dem Gehäuse zuläßt, wobei die Auslaßvorrichtung eine Öffnung in der Wand des Gehäuses und einen Einlaßfilter umfaßt, der einen entsprechenden Strom der Atmosphäre in das Gehäuse hinein zuläßt.

11. Die Vorrichtung nach Anspruch 10, wobei die Auslaßvorrichtung desweiteren einen Durchgang von beträchtlicher Länge auf der einen oder der anderen Seite der Öffnung in der Gehäusewand hat.

12. Die Vorrichtung nach einem der vorangehenden Ansprüche, wobei das Gehäuse mindestens eine Magnetspeicherplatte enthält, die mit einer Schmiermittelschicht beschichtet ist, und wobei der betreffende Dampf, der von der Behältervorrichtung bereitgestellt wird, Schmiermitteldampf ist, um durch Dampftransport die Schmiermittelschicht auf dieser mindestens einen Platte zu wahren.

13. Die Vorrichtung nach Anspruch 12, wobei die Rotation der Platten dazu führt, daß die Atmosphäre innerhalb des Gehäuses durch die Dampfablaßvorrichtung strömt oder an dieser entlangströmt.

14. Die Vorrichtung nach einem der vorangehenden Ansprüche, wobei die Rate der Dampfentfernung durch den Dampfablaß durch Konvektionsströmung begrenzt ist.

## Revendications

1. Dispositif de stockage de données comprenant un boîtier complètement hermétique, I'atmosphère à l'intérieur du dit boîtier contenant un constituant (ou plus) sous forme de vapeur, le dit dispositif incluant un système de contrôle de la pression de vapeur des dits constituants sous forme de vapeurs qui comprend un réservoir (3) qui déverse un constituant particulier sous forme de vapeur dans la dite atmosphère;
et caractérisé par un moyen d'évacuation des vapeurs (25) qui contrôle le retrait irréversible des vapeurs de la dite atmosphère, le dits moyen d'évacuation de la vapeur étant adaptésde manière à ne pas vider complètement le dit réservoir pendant une période prédéterminée.

2. Le dispositif de la revendication 1, dans lequel le dit moyen d'évacuation de la vapeur comprend un filtre qui retire les constituants de la vapeur de la dite atmosphère par adsorption, absorption ou réaction chimique.

3. Le dispositif de la revendication 2 dans lequel l'élément actif du dit filtre comprend au moins l'un des éléments suivants: charbon activé, gel de silice, aluminium activé, zéolithe synthétique ou une autre matière ayant un rapport élevé de la surface sur le volume et la capacité à absorber certains constituants sous forme de vapeur.

4. Le dit dispositif de la revendication 2 ou 3, dans lequel le dit filtre peut être enlevé de l'intérieur du dit boîtier, et le dit dispositif comprend en outre un dispositif (54) qui empêche l'air qui n'a pas été filtré d'entrer dans le boîtier quand on ôte le dit filtre.

5. Le dit dispositif revendiqué dans l'une quelconque des revendications 2 à 4, dans lequel les capacités du dit filtre et du dit réservoir sont telles que la quantité totale de vapeur que le réservoir est capable de fournir à l'atmosphère est plus grande que la quantité totale de vapeur que le filtre est capable d'enlever.

6. Le dispositif de la revendication 5, dans lequel le dit réservoir et le dit moyen d'évacuation de la vapeur sont des structures aérodynamiquement similaires, et cela de manière à maintenir un rapport controllé du débit atmosphérique au travers ou au-delà des deux structures.

7. Le dispositif de la revendication 6, dans lequel le dit réservoir et le dit moyen d'évacuation de la vapeur comprennent des passages indépendants (31, 32) disposés parallèlement et fixés à une paroi à l'intérieur du dit boîtier.

8. Le dispositif de la revendication 7 dans lequel les dits passages sont en forme d'arc et coplanaires.

9. Le dispositif de l'une quelconque des revendications précédentes, dans lequel le dit réservoir et le dit moyen d'évacuation de la vapeur sont intégrés dans une seule unité.

10. Le dispositif de la revendication 1, dans lequel le dit moyen d'évacuation de la vapeur est composé d'un déversoir qui permet un échappement controllé de l'atmosphère contenue dans le dit boîtier, le dit déversoir consistant en une ouverture dans la paroi du dit boîtier, et d'un filtre d'admission qui laisse passer un débit égal d'atmosphère dans le dit boîtier.

11. Le dispositif de la revendication 10, dans lequel le dit déversoir comprend en outre un passage d'une longueur importante sur l'un ou l'autre des côtés de la dite ouverture dans la paroi du boîtier.

12. Le dispositif de l'une quelconque des revendications précédentes, dans lequel le dit boîtier contient au moins un disque magnétique de stockage recouvert d'une couche de lubrifiant, et la dite vapeur particulière fournie par le réservoir est une vapeur lubrifiante destinée à maintenir, par transport de vapeur, la couche de lubrifiant sur le dit (ou les dits) disque(s).

13. Le dispositif de la revendication 12, dans lequel la rotation des disques induit l'atmosphère à l'intérieur du dit boîtier à passer au-travers ou au-delà du dit moyen d'évacuation de la vapeur.

14. Le dispositif de l'une quelconque des revendications précédentes, dans lequel le taux de retrait de vapeur par le moyen d'évacuation des vapeurs est limité par convection.
